# EUROPÄISCHE PATENTSCHRIFT

(11) **EP 0 601 497 B1**
(45) Veröffentlichungstag und Bekanntmachung des Hinweises auf die Patenterteilung: **12.06.1996**
(21) Anmeldenummer: 93119539.0
(22) Anmeldetag: 03.12.1993
(51) Int. Cl.: H02G 15/04, H02G 15/117, G02B 6/44

(54) **Verfahren zur Herstellung eines Sperrstopfens zur Längsabdichtung von Kabeln, insbesondere Lichtwellenleiter-Kabeln**
Process for manufacturing a stop plug for longitudinal sealing of cables, particularly of optical fibre cables
Procédé de réalisation de bouchons d'arrêt pour l'étanchéité longitudinale de câbles, en particulier de câbles à fibres optiques

(30) Priorität: 09.12.1992 DE 4241483
(43) Veröffentlichungstag der Anmeldung: 15.06.1994
(73) Patentinhaber: RXS Kabelgarnituren Gesellschaft mit beschränkter Haftung, D-58093 Hagen (DE)
(72) Erfinder: Richardt, Uwe, D-58313 Herdecke (DE)
(74) Vertreter: Fuchs, Franz-Josef, Dr.-Ing.

(56) Entgegenhaltungen:
- EP-A- 0 330 571
- DE-A- 2 608 768
- DE-B- 1 285 036
- DE-C- 850 308

## Beschreibung

Die Erfindung betrifft ein Verfahren zur Herstellung eines Sperrstopfens zur Längsabdichtung von Kabeln, insbesondere von Lichtwellenleiterkabeln, wobei der Sperrstopfen aus einer aushärtbaren, wasserbeständigen Knetmasse am Ende des abzudichtenden Kabels dicht aufgeknetet wird und daß darüber eine schrumpfbare Hüllschicht aufgebracht wird.

Sperrstopfen müssen an den Enden von den Kabeln angebracht werden, wenn die Gefahr besteht, daß sich Wasser in Längsrichtung innerhalb des Kabels ausbreiten könnte. Solche Verfahren zur Herstellung eines Sperrstopfens sind zum Beispiel bekannt aus der deutschen Offenlegungsschrift 26 08 768. Dieser Sperrstopfen wird aus Gießharz hergestellt. Dieses Gießharz liegt jedoch zunächst in flüssiger Form vor, so daß es in einer entsprechenden Gußform die am Ende des Kabels angeordnet wird, eingefüllt werden muß. Diese Gußform kann erst wieder entfernt werden, wenn das Gießharz vollkommen ausgehärtet ist. Die Herstellung eines derartigen Sperrstopfens ist also sehr aufwendig und benötigt entsprechend lange Zeit infolge der Aushärtedauer des Gießharzes.

Aus der deutschen Patentschrift DE-C-850 308 ist eine Kabel schutzhülle, insbesondere für die Übergangsstelle vom Kabelmantel auf die Kabelseele bekannt, bei der die zu schützende Stelle mit knetbarer Isoliermasse, z.B. Wachs verklebt und darüber ein vorgereckter Kunststoffschlauch geschoben ist, der durch Erhitzen zum Schrumpfen gebracht ist.

Der vorliegenden Erfindung liegt nun die Aufgabe zugrunde, das Verfahren zur Herstellung eines Sperrstopfens und den Sperrstopfen selbst am Ende des Kabels insbesondere eines Lichtwellenleiter-Kabels, zu verbessern. Die gestellte Aufgabe wird nun mit einem Verfahren der eingangs genannten Art dadurch gelöst, daß die Knetmasse des Sperrstopfens in mehreren ringförmigen Schichten übereinander aufgebracht wird, wobei zunächst eine erste Schicht aufgebracht wird, in die die zugfesten Fäden des Lichtwellenleiterkabels durch Zurückbiegen eingelegt werden, daß dann mit einer zweiten Schicht die zugfesten Fäden überdeckt werden und daß schließlich eine dritte Schicht zwischen die Aderhüllen, eventuell vorhandene Kupferleitungen, das Zentralelement und eventuell vorhandene Schirmverbindungen so eingeknetet wird, daß mit der vorher aufgebrachten zweiten Schicht ein dichter Abschluß gebildet ist.

Weiterhin wird die Aufgabe gemäß der Erfindung mit einem Sperrstopfen dadurch gelöst, daß er aus mehreren Schichten einer aushärtbaren, wasserbeständigen Knetmasse und einer darüber liegenden schrumpfbaren Hüllschicht besteht.

Der große Vorteil des Verfahrens gemäß der Erfindung zur Herstellung eines Sperrstopfens ist nun darin zu sehen, daß keine Gußform mehr zur Verfügung stehen muß und daß die Aushärtezeit des Materials, aus dem der Sperrstopfen gebildet wird, nicht abgewartet werden muß. So wird hier ein aushärtendes, zunächst plastisch verformbares Material in Form einer Knetmasse verwendet, die in der nachfolgend näher beschriebenen Art am Ende eines Kabels, insbesondere eines Lichtwellenleiter-Kabels, angeformt wird, wobei zusätzliche Vorrichtungen nicht benötigt werden. Diese Knetmasse besteht vorzugsweise aus zwei Materialkomponenten, die bei Bedarf zusammengebracht und gleichmäßig miteinander vermischt werden. Dann wird die Knetmasse aufgebracht und darüber eine Hüllschicht aus vorzugsweise kaltschrumpfendem Material, die bewirkt, daß die darunter liegende Knetmasse verdichtet und in noch offene Hohlräume eingepreßt wird. Dabei ist keine weitere Maßnahme mehr nötig, da die Knetmasse dann selbsttätig aushärtet. Die Knetmasse ist zum Beispiel ein ISO-Epoxydharz mit der Bezeichnung M-SEAL von der Firma Mahindra Egnineering Chemical Products Ltd., Bombay - Indien.

Die Einzelheiten des Verfahrens und des Sperrstopfens gemäß der Erfindung werden nun anhand von fünf Figuren näher erläutert.
- Figur .1: zeigt den ersten Schritt des Verfahrens.
- Figur 2: zeigt die Auflage einer ersten Schicht aus Knetmasse und die Einbettung der zugfesten Fäden eines Lichtwellenleiter-Kabels.
- Figur 3: zeigt die Auflage einer zweiten Schicht aus Knetmasse.
- Figur 4: zeigt das Abdichten der Stirnseite eines Kabels.
- Figur 5: zeigt den mit einer Hüllschicht versehenen Sperrstopfen.

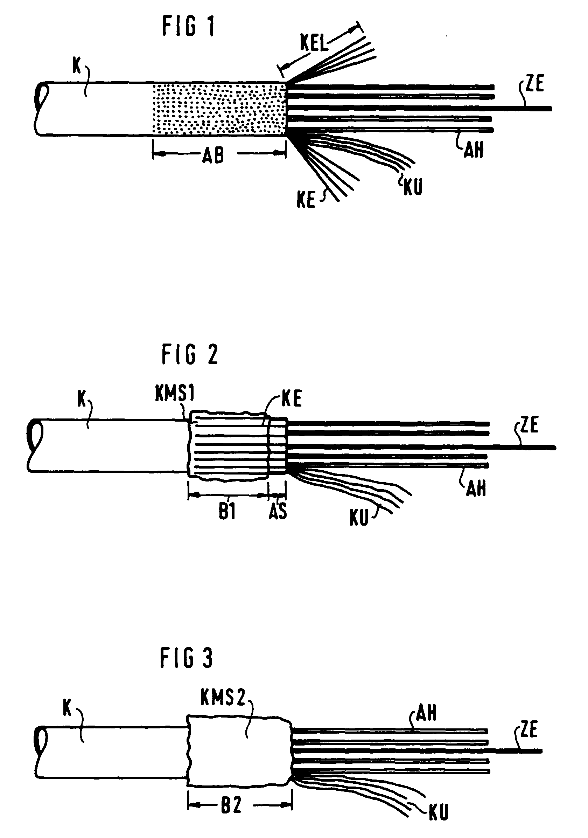

Die Figur 1 zeigt die Vorbereitungen für die Herstellung des Sperrstopfens gemäß der Erfindung am Ende eines Kabels K, in diesem Fall eines Lichtwellenleiter-Kabels K. Der Kabelmantel wurde in entsprechender Länge abgesetzt, so daß die Aderhüllen AH das Zentralelement ZE und die zugfesten Fäden KE, die sogenannten Kevlar-Fäden, sowie unter Umständen auch Kupferadern KU freigelegt sind. Die zugfesten Fäden KE werden gekürzt, vorzugsweise für die Ausführung des Sperrstopfens auf 30 mm Länge und das Ende des Kabelmantels wird gereinigt und aufgerauht auf dem ringförmigen Bereich AB von vorzugsweise 40 mm Länge . Dabei werden auch die Aderhüllen AH, die Kevlar-Fäden KE und das Zentralelement ZE gereinigt, zum Beispeil mit Testbenzin. Die Aderhüllen AH können anschließend mit einem Heißluft - Föhn geglättet werden Sollten eventuell noch Schirmverbindungen hergestellt werden, so können die hierfür notwendigen Schirmverbindungsangsanschlüsse ebenfalls hergestellt werden.

In Figur 2 wird nun der nächste Schritt verdeutlicht. So werden zunächst die zwei Komponenten der Knetmasse innig miteinader vermengt und verknetet, bis eine gleichmäßige Färbung der Knetmasse erreicht ist. Dann wird hiervon eine erste Schicht von Knetmasse KMS1 ringförmig in vorzugsweise einer Länge von 25 mm auf den vorbereiteten Kabelmantel K aufgebracht, wobei das Ende des Kabelmantels in einem Abstand AS von vorzugsweise 5 mm Länge frei bleibt. In diesen beschichteten Bereich B1 hinein werden die zugfesten Fäden KE (Kevlar) zurückgebogen und eingelegt.

Die Figur 3 zeigt, daß eine zweite Schicht aus Knetmasse KMS2 auf die erste Schicht KMS1 und die zurückgebogenen zugfesten Fäden KE aufgebracht wird, wobei diese einen Bereich B2 überdeckt, der größer ist als der erste und vorzugsweise 30 mm lang ist und sich bis zum Ende des Kabelmantels K erstreckt. Auf diese Weise werden die zugfesten Fäden KE vollständig überdeckt und fixiert.

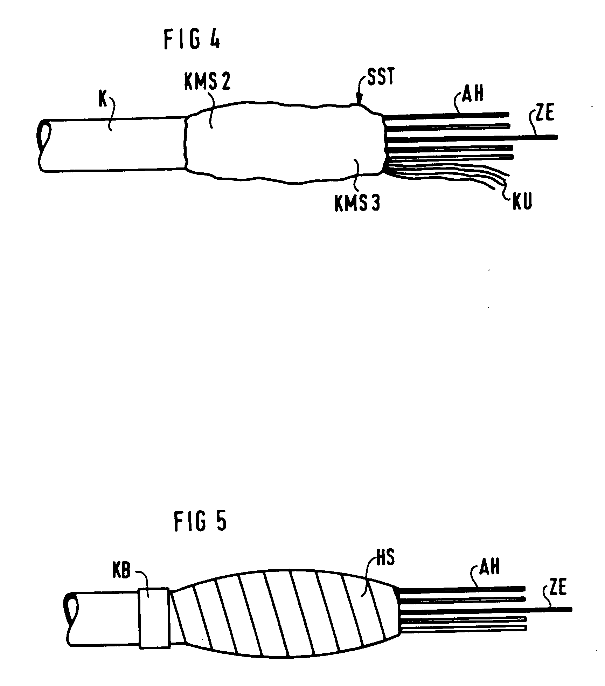

Aus Figur 4 geht hervor, daß nun eine dritte Schicht KMS3 vor allem stirnseitig aufgebracht und zwischen die Aderhüllen AH, dem Zentralelement ZE, den Kupferadern KU und den eventuell ebenfalls ausgeführten Schirmverbindungen eingeknetet wird, so daß sich ein dichter stirnseitiger Abschluß bildet. Dabei wird die Schicht KMS3 mit der Schicht KMS2 dicht gegenseitig verknetet. Nach dem Aushärten der Knetmasse ist ein dichter Sperrstopfen SST gebildet, wobei die Aushärtezeit der Knetmasse nicht abgewartet werden muß, da Nacharbeiten, wie zum Beispiel die Entnahme einer Gußform, nicht nötig sind.

In Figur 5 ist noch gezeigt, daß der Sperrstopfen schließlich mit einer Hüllschicht HS aus an sich bekanntem Material aufgebracht werden kann, doch wird vorzugsweise ein Kaltschrumpfband von ca. 400 mm Länge verwendet, das spiralförmig aufgewickelt und am Ende zum Beispiel mit einem Klebeband fixiert wird.

Die Beschreibung des Sperrstopfens SST wie er in den Patentansprüchen 5 bis 11 gekennzeichnet ist, wurde bereits bei der Beschreibung des Verfahrens mit einbezogen, so daß sich weitere Erläuterungen erübrigen.

## Patentansprüche

1. Verfahren zur Herstellung eines Sperrstopfens zur Längsabdichtung von Kabeln, insbesondere von Lichtwellenleiter-Kabeln, wobei der Sperrstopfen (SST) aus einer aushärtbaren, wasserbeständigen Knetmasse (KM) am Ende des abzudichtenden Kabels (K) dicht aufgeknetet wird und daß darüber eine schrumpfbare Hüllschicht (HS) aufgebracht ist,
**dadurch gekennzeichnet,**
daß die Knetmasse (KM) des Sperrstopfens (SST) in mehreren ringförmigen Schichten übereinander aufgebracht wird, wobei zunächst eine erste Schicht (KMS1) aufgebracht wird, in die die zugfesten Fäden (KE) des Lichtwellenleiterkabels (K) durch Zurückbiegen eingelegt werden, daß dann mit einer zweiten Schicht (KMS2) die zugfesten Fäden (KE) überdeckt werden und daß schließlich eine dritte Schicht (KMS3) zwischen die Aderhüllen (AH), eventuell vorhandene Kupferleitungen (KU), das Zentralelement (ZE) und eventuell vorhandene Schirmverbindungen so eingeknetet wird, daß mit der vorher aufgebrachten zweiten Schicht (KMS2) ein dichter Abschluß gebildet ist.

2. Verfahren nach Anspruch 1,
**dadurch gekennzeichnet,**
daß die Hüllschicht (HS), vorzugsweise aus einem kaltschrumpfenden Wickelband, aufgebracht wird.

3. Verfahren nach einem der vorhergehenden Ansprüche,
**dadurch gekennzeichnet,**
daß vor dem Aufbringen der ersten Schicht aus Knetmasse (KMS1) das Kabel (K) im Endbereich gereinigt und aufgerauht wird.

4. Sperrstopfen, hergestellt nach einem der vorhergehenden Ansprüche,
**dadurch gekennzeichnet,**
daß er (SST) aus mehreren Schichten (KMS1, KMS2, KMS3) einer aushärtbaren, wasserbeständigen Knetmasse (KM) und einer darüber liegenden schrumpfbaren Hüllschicht (HS) besteht.

5. Sperrstopfen nach Anspruch 4,
**dadurch gekennzeichnet,**
daß die Knetmasse (KM) ein Zweikomponenten-Material, vorzugsweise ein ISO-Epoxydharzkitt ist.

6. Sperrstopfen nach einem der Ansprüche 4 oder 5,
**dadurch gekennzeichnet,**
daß die Hüllschicht (HS) vorzugsweise aus einem kaltschrumpfenden Wickelband, über der letzten Schicht aus Knetmasse (KMS3) angeordnet ist.

7. Sperrstopfen nach einem der Ansprüche 4 bis 6,
**dadurch gekennzeichnet,**
daß das Kabel (K) vom Ende her in einem der Länge des Sperrstopfens (SST) entsprechenden Bereich (AB), vorzugsweise entlang 40 mm, aufgerauht ist.

8. Sperrstopfen nach einem der Ansprüche 4 bis 7,
**dadurch gekennzeichnet,**
daß die erste Schicht aus Knetmasse (KMS1) im Abstand (AS), vorzugsweise 5 mm, vom Ende des Kabels (K) über einen Bereich (B1) von vorzugsweise 25 mm aufgebracht ist und daß darin die Enden der zugfesten Fäden (KE) eingebettet sind.

9. Sperrstopfen nach einem der Ansprüche 4 bis 8,
**dadurch gekennzeichnet,**
daß die zweite Schicht aus Knetmasse (KMS2) vom Ende des Kabels (K) her über einen Bereich (B2) von vorzugsweise 30 mm aufgebracht ist und mit der dritten, im wesentlichen stirnseitig aufgebrachten Schicht aus Knetmasse (KMS3) verknetet ist.

10. Sperrstopfen nach einem der Ansprüche 4 bis 9,
**dadurch gekennzeichnet,**
daß das Ende des Wickelbandes der Hüllschicht (HS) mit einem Klebeband (KB) gesichert ist.

## Claims

1. Process for manufacturing a stop plug for the longitudinal sealing of cables, particularly of optical fibre cables, the stop plug (SST) being kneaded from a curable, water-resistant kneading compound (KM) in a sealed manner onto the end of the cable (K) to be sealed, and a shrinkable enveloping layer (HS) being applied thereover, characterized in that the kneading compound (KM) of the stop plug (SST) is applied in a plurality of annular layers one on top of the other, in that firstly a first layer (KMS1) is applied, into which the tensile threads (KE) of the optical fibre cable (K) are laid by bending back, in that then the tensile threads (KE) are covered by a second layer (KMS2) and in that finally a third layer (KMS3) is kneaded between the buffers (AH), any copper leads (KU) there are, the central element (ZE) and any screening connections there are, such that a sealed termination is formed together with the previously applied second layer (KMS2).

2. Process according to Claim 1, characterized in that the enveloping layer (HS), preferably comprising a cold-shrinking winding tape, is applied.

3. Process according to one of the preceding claims, characterized in that, before applying the first layer of kneading compound (KMS1), the cable (K) is cleaned and roughened in the end region.

4. Stop plug, produced according to one of the preceding claims, characterized in that the said plug (SST) comprises a plurality of layers (KMS1, KMS2, KMS3) of a curable, water-resistant kneading compound (KM) and a shrinkable enveloping layer (HS) lying thereover.

5. Stop plug according to Claim 4, characterized in that the kneading compound (KM) is a two-component material, preferably an ISO epoxy resin cement.

6. Stop plug according to one of Claims 4 or 5, characterized in that the enveloping layer (HS), preferably comprising a cold-shrinking winding tape, is arranged over the last layer of kneading compound (KMS3).

7. Stop plug according to one of Claims 4 to 6, characterized in that the cable (K) is roughened from the end in a region (AB) corresponding to the length of the stop plug (SST), preferably along 40 mm.

8. Stop plug according to one of Claims 4 to 7, characterized in that the first layer of kneading compound (KMS1) is applied over a region (B1) of preferably 25 mm at a distance (AS), preferably 5 mm, from the end of the cable (K) and in that the ends of the tensile threads (KE) are embedded therein.

9. Stop plug according to one of Claims 4 to 8, characterized in that the second layer of kneading compound (KMS2) is applied over a region (B2) of preferably 30 mm from the end of the cable (K) and is kneaded with the third layer of kneading compound (KMS3), which is applied essentially to the end face.

10. Stop plug according to one of Claims 4 to 9, characterized in that the end of the winding tape of the enveloping layer (HS) is secured by an adhesive tape (KB).

## Revendications

1. Procédé de fabrication d'un bouchon (SST) d'arrêt pour rendre un câble étanche suivant la direction longitudinale, notamment un câble en fibres optiques, le bouchon (SST) d'arrêt, en un composition (KM) malleable résistante à l'eau et pouvant être durcie, étant appliquée de manière étanche à l'extrémité du câble (K) à rendre étanche et une couche (HS) de gainage rétractable étant appliquée par dessus, caractérisé en ce qu'il consiste à déposer la composition (KM) malleable du bouchon (SST) d'arrêt en plusieurs couches annulaires les unes au dessus des autres, en appliquant d'abord une première couche (KMS1), dans laquelle les fibres résistants à la traction du câble (K) en fibres optiques sont insérées en étant recourbées, à recouvrir ensuite les fibres (KE) résistant à la traction d'une deuxième couche (KMS2) et enfin à insérer une troisième couche (KMS3) entre les gaines (AH) d'âme, des conducteurs (KU) en cuivre éventuellement présents, l'élément (ZE) central et des liaisons écrans éventuellement présentes de manière que une fermeture étanche soit formée avec la deuxième couche (KMS2) préalablement appliquée.

2. Procédé suivant la revendication 1, caractérisé en ce que la couche (HS) de gainage est appliquée de préférence à partir d'une bande enroulée rétractable à froid.

3. Procédé suivant l'une des revendications précédentes caractérisé en ce que avant l'application de la première couche en une composition (KMS1) malléable, le câble (K) est nettoyé et rendu rugueux dans la zone d'extrémité.

4. Bouchon d'arrêt fabriqué suivant l'une des revendications précédentes caractérisé en ce que le bouchon est constitué de plusieurs couches (KMS1, KMS2, KMS3) d'une composition (KM) malléable résistante à l'eau et pouvant être durcie et d'une couche (HS) de gainage rétractable posée sur ces couches.

5. Bouchon d'arrêt suivant la revendication 4 caractérisé en ce que la composition (KM) malléable est un matériau à deux constituants, de préférence un mastic de résine ISO époxy.

6. Bouchon d'arrêt suivant l'une des revendications 4 ou 5 caractérisé en ce que la couche (HS) de gainage, de préférence sous la forme d'une bande enroulée rétractable à froid, est disposée sur la dernière couche en la composition (KMS3) malléable.

7. Bouchon d'arrêt suivant l'une des revendications 4 à 6 caractérisé en ce que le câble (K) est rendu rugueux à partir de l'extrémité dans une zone (AB) correspondant à la longueur du bouchon (SST) d'arrêt, de préférence sur 40 mm.

8. Bouchon d'arrêt suivant l'une des revendications 4 à 7, caractérisé en ce que la première couche en la composition (KMS1) malléable est appliquée à distance (AS), de préférence 5mm, de l'extrémité du câble (K), sur une zone (B1) de préférence de 25mm et en ce que les extrémités des fibres (KE) résistant à la traction y sont noyées.

9. Bouchon d'arrêt suivant l'une des revendications 4 à 8 caractérisé en ce que la seconde couche en une composition (KMS2) malléable est appliquée à partir de l'extrémité du câble (K) sur une zone (B2) de préférence de 30mm et avec la troisième couche en une composition (KMS3) malléable, qui est appliquée sensiblement du côté frontal.

10. Bouchon d'arrêt suivant l'une des revendications 4 à 9, caractérisé en ce que l'extrémité de la bande enroulée de la couche (HS) de gainage est fixée par un ruban (KB) collant.
